(19)

**Europäisches Patentamt**

**European Patent Office**

**Office européen des brevets**

(11) **EP 2 232 772 B1**

(12) **EUROPEAN PATENT SPECIFICATION**

(45) Date of publication and mention of the grant of the patent:
**06.06.2012 Bulletin 2012/23**

(21) Application number: **08856581.7**

(22) Date of filing: **05.12.2008**

(51) Int Cl.:
*H04L 12/26* (2006.01)          *H04L 12/56* (2006.01)
*G06F 15/16* (2006.01)

(86) International application number:
**PCT/EP2008/066940**

(87) International publication number:
**WO 2009/071692 (11.06.2009 Gazette 2009/24)**

(54) **METHOD FOR CHARACTERIZING A COMMUNICATION LINK IN A COMMUNICATION NETWORK**

VERFAHREN ZUR CHARAKTERISIERUNG EINER KOMMUNIKATIONSVERBINDUNG IN EINEM KOMMUNIKATIONSNETZWERK

PROCÉDÉ POUR CARACTÉRISER UNE LIAISON DE COMMUNICATION DANS UN RÉSEAU DE COMMUNICATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.12.2007 EP 07301629**

(43) Date of publication of application:
**29.09.2010 Bulletin 2010/39**

(73) Proprietor: **Thomson Licensing**
**92130 Issy-les-Moulineaux (FR)**

(72) Inventors:
• **LUNDGREN, Henrik**
**F-75015 Paris (FR)**

• **CARRERA, Marianna**
**F-75015 Paris (FR)**
• **SALONIDIS, Theodoros**
**F-75005 Paris (FR)**
• **DIOT, Christophe**
**F-75005 Paris (FR)**

(74) Representative: **Amor, Rim**
**Technicolor SA**
**Intellectual Property & Licensing**
**European Patent Opearations**
**1, rue Jeanne D'Arc**
**92443 Issy-les-Moulineaux (FR)**

(56) References cited:
**WO-A-2006/006117          US-A1- 2006 059 256**
**US-A1- 2007 060 157**

## Description

### FIELD OF THE INVENTION

The present invention pertains to the field of communication networks.

The present invention more particularly relates to a method for characterizing a communication link in a communication network.

### BACKGROUND OF THE INVENTION

A wireless mesh network can be defined as a network made of static nodes interconnected by wireless links. Each node has dual functionality: on one hand, it acts as a legacy access point and allows clients to connect to the Internet; on the other hand, it acts as a router and forwards packets on behalf of the other nodes. A mesh node has multiple radio interfaces. Typically, one interface is dedicated to the access point functionality while the others to the mesh connectivity. Only some special nodes called gateways are connected to Internet.

Wireless mesh networks have been deployed, both at universities and companies, as research testbeds, as well as in cities, for public shared Internet access.

In the frame of the present invention, the "Network Layer" is Layer 3 (of seven) in the OSI model of networking.

Mesh network deployments, such as RoofNet (J. Bicket, D. Aguayo, S. Biswas, and R. Morris. "Architecture and evaluation of an unplanned 802.11b mesh network" - In MobiCom '05: Proceedings of the 11th annual international conference on Mobile computing and networking, pages 31-42, New York, NY, USA, 2005. ACM Press - Roofnet website at URL: http://pdos.csail.mit.edu/roofnet/doku.php.), Rice University's TFA (TFA and Rice wireless network website at URL: http://tfa.rice.edu/) and UCSB MeshNet (H. Lundgren, K. Ramachandran, E. Belding-Royer, K. Almeroth, M. Benny, A. Hewatt, A. Touma, and A. Jardosh. "Experiences from building and using the UCSB meshnet testbed" - In IEEE Wireless Network, April 2006) are primarily used for research purposes. However, the above-cited RoofNet and TFA networks are also used by dedicated communities in the neighborhood where they are deployed. Today, several companies, such as Tropos and Packet Hop, offer mesh solutions for city-wide deployment, primarily for public shared Internet access. Some non-profit organizations, such as NetEquality offer mesh-based Internet access targeting low-income communities. NetEquality uses off-the-shelf products from Meraki Networks Inc, which can also be used by home owners to deploy private autonomous mesh networks.

One challenge in a mesh network is to carry Internet-like traffic (e.g., TCP, UDP, voice, streaming...) in an environment which is very different from the legacy wired Internet. The unreliability of the wireless links and the delay introduced by the MAC layer, reflect on the transport and application layers as degradation in performance. These problems are further accentuated in mesh networks where data traffic typically travels over multiple wireless hops. Routing protocols originally designed for mobile ad hoc networks have been adapted for mesh networks, such as, DSR (D. Johnson, Y.-C. Hu, and D. Maltz. "The dynamic source routing protocol (DSR) for mobile ad hoc networks for IPv4" - February 2007. IETF Internet RFC 4728), AODV (C. Perkins, E. Belding-Royer, and S. Das - "Ad hoc on-demand distance vector (AODV) routing" - July 2003. IETF Internet RFC 3561), OLSR (T. Clausen and P. Jacquet - "Optimized link state routing protocol (OLSR)", October 2003. IETF Internet RFC 3626) and more recently adapted versions of DSR, such as LQSR(R. Draves, J. Padhye, and B. Zill - "Routing in multi-radio, multi-hop wireless mesh networks" In MobiCom '04: Proceedings of the 10th annual international conference on Mobile computing and networking, pages 114-128, New York, NY, USA, 2004. ACM Press) and SRCR (identified above as Roofnet). The AODV and OLSR algorithms also form the basis in the algorithms proposed within the ongoing standardization effort of IEEE 802.11s. The goal of such routing protocols is to select and maintain high performance paths with the help of some cost metric. In contrast to wired networks, classic hop count based routing does not perform well in multi-hop wireless networks (See for instance: D. Aguayo, J. Bicket, S. Biswas, G. Judd, and R. Morris - "Link-level measurements from an 802.11b mesh network" - SIGCOMM Comput. Commun. Rev., 34 (4):121-132, 2004). A short path may consist in links having lower bit rates and/or higher packet losses than other links on a longer path, thus leading to lower throughput on the short path. Recent proposed link metrics, such as ETX (D. Couto, D. Aguayo, J. Bicket, and R. Morris - "A high-throughput path metric for multi-hop wireless routing" - 2003) and ETT (R. Draves, J. Padhye, and B. Zill - "Routing in multi-radio, multi-hop wireless mesh networks" - In MobiCom '04: Proceedings of the 10th annual international conference on Mobile computing and networking, pages 114-128, New York, NY, USA, 2004 - ACM Press) have been shown to result in unstable multi-hop routes and to be sensitive to the traffic load on the wireless link (S. M. Das, H. Pucha, D. Papagianakki, and Y. C. Hu. "Understanding wireless routing link metric dynamics" - In IMC '07, 2007).

A current critical challenge in the field of wireless mesh networks is the following: how to design and implement a link cost metric that accurately reflects the wireless link characteristics that in turn can be provided as input to help the routing protocols construct high performance paths?

Routing protocols for multi-hop wireless networks standardized with IETF, such as, for instance, above-cited DSR, AODV and OLSR protocols did originally not consider any other cost than the traditional hop count metric, as used in wired networks. However, hop count has been shown to not perform well for multi-hop wireless mesh networks (See for instance above-identified scientific publication from D. Aguayo et al.) The so-called "hop count metric" selects "long-hop links" to minimize the hop count of a route. While minimizing the number of hops is good since the performance drops significantly for each additional hop, this approach can turn out to be counter-productive. The reason for this is that these long-hop links may have lower bit rate and higher packet loss than alternative (short-hop) links, and thus result in overall lower performance for routes solely based on hop count. Some prior work has proposed to complement hop count with link quality estimation in form of signal strength information to exclude weak links. While such an approach can lead to performance improvements in some cases (See: H. Lundgren, E. Nordstrom, and C. Tschudin - "Coping with communication gray zones in IEEE 802.11b based ad hoc networks" - In Proceedings of the 5th ACM International Workshop on Wireless Mobile Multimedia (WoWMoM) - September 2002), it does not consider that the signal strength may not have a strong correlation to the used bit rate (See above-identified scientific publication from D. Aguayo et al.) and thus does not accurately reflect the performance of the link. Other prior work have proposed link cost metrics primarily based on the expected number of transmissions and the expected transmission time of a data packet. For example, the above-cited "ETX" link metric uses broadcast probes to estimate the packet loss of a link. The above-cited "ETT" link metric builds on ETX and adds a transmission time component based on packet pair probing of the current bandwidth. These two link cost metrics have been used as components in routing metrics that aim to evaluate full multi-hop paths, e.g., in ETX, ETT, EDR, and MIC (Y. Yang, J. Wang, and R. Kravets - "Interference-aware load balancing for multihop wireless networks" - Technical report, University of Illinois at Urbana-Champaign, 2005). While these routing metrics address the goal of constructing good paths, the basis of these metrics is still the estimated individual link costs. A good estimation of the link cost is thus the fundament of any good routing metric.

Although the ETX and ETT link metrics provide some information about link characteristics, there are a few shortcomings with their existing approaches. The proposed measurement techniques using network level broadcast packets probes and unicast packet pair probes, provide only rough estimates of the respective quantities expected transmissions count and total bandwidth (See above-identified scientific publications R. Draves et al. and S. M. Das et al.). Given these proposed and widely used measurement techniques, any extension to one of the techniques called "ETX" and "ETT" would suffer from the same related inaccuracies. The prior art also knows the following scientific publication: K.-H. Kim and K. G. Shin - "On accurate measurement of link quality in multihop wireless mesh networks" - In MobiCom '06: Proceedings of the 12th annual international conference on Mobile computing and networking, pages 38-49, New York, NY, USA, 2006 - ACM Press. This publication from K.-H. Kim et al. addresses the inaccuracy of "ETX" by replacing the broadcast probes with unicast transmission count statistics from the MAC (Media Access Control) MIB (Management Information Base), it does not include any further MAC aspects. To the best of the knowledge of the inventors of the present invention, there is no previous work which includes detailed MAC aspects in the link metric along with an improved accuracy of the measured quantities of the link metric.

The main previous art will now be surveyed in more detail.

### Expected Transmission Count Metric

The so-called "ETX" (Estimated Transmission Count) prior art technique defines the cost of a link as the expected number of retransmission required to successfully deliver a layer-3 packet and builds on it an additive path metric to select a high-throughput path. In order to estimate the expected number of retransmissions, it measures the delivery ratio of broadcast packets, on the forward directions of a link $d_f$ and on the reverse direction of the same link $d_r$ and then computes:

$$ETX = \frac{1}{d_f . d_r}$$

However, since the broadcast packets are not subject to the rate adaptation algorithm, and since they are always sent at the lowest bit-rate, which is more resistant to corruption, the delivery ratio of broadcast packet is likely to be an overestimation of the delivery ratio of frames sent at a higher bit-rate. Moreover, since the broadcast packets are not acknowledged, the delivery ratio on a link is computed as the product of the delivery ratios measured on the two directions of the link. Each of them is measured on one side of the link by counting the number of received broadcast probes sent by each neighbor node and dividing this number (for each sender) by the number of expected probes (known the sending rate). Thus, ETX uses the same broadcast delivery ratio to compute the forward delivery ratio of a link, and the reverse (ACK) delivery ratio on the other direction of the link. Since the ACK packets are much smaller than data packets, the choice of the size of the probe packets will best model one of the two packets types, but not both.

### Expected Transmission Time Metric

The so-called "ETT" (Expected Transmission Time) prior art technique is designed to take into account the variability of the wireless link bandwidth. The aim of ETT is to estimate the expected transmission time for a unicast packet, from the expected number of retransmission and the estimated bandwidth of the link. To estimate the link bandwidth, a packet pair is periodically sent, and the delay between the receptions of the two packets is measured. The bandwidth is then computed as the ratio between the minimum delay over (typically) 10 samples, and the size of the second packet. ETT is thus defined as the product of the expected number of retransmissions and the ratio between the size of the probe packets and estimated bandwidth:

$$ETT = ETX.\frac{S}{B}$$

where the expected number of retransmissions is *ETX, S* is the packet size and *B* is the link bandwidth.

However, this method based on packet pairs estimates the bandwidth under the assumption that the second packet is sent immediately after the first one, so that the measured delay is the air transmission time of this second packet. Due to the access to the medium mechanism defined by the 802.11 MAC (Media Access Control), the second packet is not sent immediately after the first one. In the best case, when none of the node's neighbors is willing to transmit (no contention) and the packet is successfully received at the first transmission, this delay will be the sum of the following: (1) a SIFS (Short Interframe Space), (2) an ACK-time (the time to receive the ACK), (3) a DIFS (DCF InterFrame Space), (4) a backoff time (based on the minimum contention window). Under other conditions, this time increases: for example, in presence of contention, after the first packet the node releases the medium and another one takes its turn in sending a packet. After some time, the first node will obtain control of the medium again and will send the second packet. The time spent to wait the medium to be free will be part of the computed delay, along with the above listed times. Moreover, if the second packet failed to be delivered at the first try, it will be retransmitted, and each of the above mentioned times will be part of the delay once per each retransmission. In the evaluation of the packet pair technique disclosed in the following publication: *"Comparison of routing metrics for static multi-hop wireless networks"* (R. Draves, J. Padhye and B. Zill - SIGCOMM Comput. Commun. Rev., 34(4):133-144, 2004), the authors have measured the accuracy of this technique in approximating the link bit-rate over a 100 second window. In another publication entitled *"Routing in multi-radio, multi-hop wireless mesh networks"* (already mentioned above) the same authors have considered the minimum bandwidth estimation over 10 seconds. In both cases, the estimation is accurate enough to discriminate between the discrete bit-rates used by 802.11. However, to improve the delivery ratio of a link, a rate adaptation algorithm can adapt the rate almost on a per transmission base (for example, in the "MadWifi" network card driver implementation, up to 4 different rates can be used for the retransmission of a single layer-3 packet). In this case, a sample of the link bandwidth every second, based on the probes of the last 10 seconds, is not representative of the bit-rates used in those 10 seconds, and no better estimation such as the average bit-rate or the most used bit-rate can be inferred, see also document US 2007/060157.

The international Patent application WO 2006/006117 discloses a method for estimating the quality of communication links in a packet switched network transmitting unicast packets. The estimation is performed by measuring the signal strength and by computing the average signal strength for a predetermined period of time. This average is then used as an indicator for the link quality in the computation of the link quality estimation.

## SUMMARY OF THE INVENTION

The present invention aims at solving the above-mentioned drawbacks that are present in the solutions of the prior art.

In contrast to the above-presented methods of the prior art, the method according to the present invention (X-UTT) frequently samples the link with unicast packets and, for each probe, considers the bit-rate used for each retransmission. This enables to compute the time spent in transmitting a frame, based on the actual used bit-rates.

A study of the variability of ETX and ETT on short and long time scales has been conducted in the following scientific publication: *"Understanding wireless routing link metric dynamics"* - S. M. Das, H. Pucha, D. Papagianakki, and Y. C. Hu - In IMC '07, 2007. The authors of this publication have shown that ETX (and thus the ETX component of ETT) varies significantly over very short time intervals, and it is heavily affected by background traffic. Attributing this dependency to the broadcast based probing system, they emphasize the importance of the definition of a probing system based on unicast, suggesting to lower the probing frequency to balance the bigger overhead introduced by probe retransmissions. Unicast probing yields higher accuracy, but should be carefully designed since the overhead grows quadratically with the number of nodes, since each node sends a packet to each of its neighbors. The overhead is even bigger in terms of MAC frame transmissions because the unicast probe packets will potentially be retransmitted.

It is believed that the only previous system based on unicast probes is EAR as disclosed in *"On accurate measurement of link quality in multihop wireless mesh networks"* K.-H. Kim and K. G. Shin - In MobiCom '06: Proceedings of the 12th annual international conference on Mobile computing and networking, pages 38-49, New York, NY, USA, 2006 - ACM Press. The systems as disclosed in this publication interface with the MAC MIB to obtain statistical information on the number of retransmissions and the used bit-rates. These statistics only gives a single value for multiple packet transmissions. Furthermore, only the number of retransmissions is considered in their link cost metric. In contrast, the present invention builds upon detailed MAC layer information for each probe packet, and defines a metric that leverage this information.

The present invention particularly relates to a method for characterizing a communication link in a communication network.

The inventors of the present invention have defined X-UTT *(cross-layer Unicast Transmission Time)* as a link cost metric which relates the average packet transmission time for a unicast packet to the unicast delivery ratio. This link cost metric, designated as X-UTT, captures two key aspects of the MAC (Media Access Control) layer error control mechanism. One function of this error control mechanism is to hide frame losses to the upper layer by retransmitting the failed frames. In this way, the MAC layer increases the layer-3 delivery ratio, and thus the perceived capacity. However, resending a frame will increase the packet transmission time and, in turn, decrease the perceived link capacity. The link cost metric, designated as X-UTT, captures both above-mentioned aspects.

The inventors of the present invention have also designed a measurement methodology in order to accurately capture the quantities needed to compute the link cost metric designated as X-UTT. The measurement methodology designed by the inventors of the present invention is based on a probing system using unicast probes, along with a cross-layer monitoring system. This methodology enabled the inventors to capture the components of the above-mentioned link cost metric designated as X-UTT, namely the MAC retransmission count, the bit rate used for each MAC transmission, and the sum of the MAC back-off time per each transmission.

At least some of the novelties of the link cost metric designated as X-UTT and of the measurement methodology approach are the use of unicast network layer packets, more accurate than broadcast based probing system, and the definition of this metric from quantities measured at layer 2 and gathered directly from the driver.

It is possible to operate a distinction between two types of routing metrics: traffic-independent metrics and traffic-dependent metrics.

Traffic independence can be of primary importance for link metrics used as part of routing metrics because it provides the routing algorithm with a measure of the link condition independent from the traffic. Traffic-dependent routing metrics need to cope with routing instability: when the link cost is determined mainly by the traffic on the link, this will trigger route changes which will cause a shift in the traffic and thus a change in the link cost, which will potentially trigger recursive route changes.

The method according to the present invention has the capacity to support both types of routing metrics: traffic-independent metrics and traffic-dependent metrics.

The main contributions of the present invention, in comparison with the prior art, are summed-up in the next three paragraphs.

In a sense, the present invention provides a methodology for flexible and accurate characterization of link quality in a wireless communication network. Said methodology consists of (i) a cross-layer link metric (called X-UTT) composed of layer 2 and layer 3 quantities of the OSI protocol stack, and (ii) a cross-layer measurement methodology based on unicast network layer packets that accurately measures and computes the metric quantities using detailed information of these packets' transmissions by the MAC layer.

The present invention can support both traffic-independent metrics and traffic-dependent metrics. For the case of traffic-independent metrics the invention provides high correlation to wireless link capacity and low sensitivity to network traffic. For the case of traffic-dependent metrics, the present invention can adapt to traffic changes, to increase network performance.

Prior art metrics for wireless link characterization are based on summary statistics of broadcast probe packets of unicast probe packets typically measured at the network layer. In addition, their definitions do not provide the flexibility of traffic-dependence or traffic-independence. Therefore, the metrics of the prior art do not enable flexible and accurate characterization of wireless link quality.

The present invention is defined, in its broader sense, as a method for characterizing a communication link in a communication network comprising at least two communication nodes (n1, n2, ..., np) and operating using a network protocol comprising a MAC (Media Access Control) layer and a network layer, said method comprising the steps of:

- sending unicast packets from a communication node (n1) comprising a driver, to another communication node (n2) through a link (1[n1,n2]);
- collecting, by said node (n1) at the level of said driver, information (I) concerning transmission characteristics at the level of both MAC layer and network layer;
- deriving, from said collected information (I), the following values:

  - delivery ratio of unicast packets (*du*); and
  - average time to transmit a unicast packet (*PTT*); and

- estimating, in said node (n1), the quality of said link l[n1,n2]) at the level of both MAC layer and network layer, by computing the following quantity:

$$\frac{mean(PTT)}{du}.$$

According to an embodiment, said time to transmit a unicast packet, is computed as the sum of:

(1) the time to access the medium;
(2) the time to actually send a frame on the air; and
(3) the time to get (or not) the acknowledgement (ACK) back.

According to an embodiment, said time to transmit a unicast packet *(PTT),* is computed as the sum of:

(1) the time spent in waiting the medium to be free;
(2) the time to access the medium;
(3) the time to actually send a frame on the air; and
(4) the time to get (or not) the acknowledgement (ACK) back.

From here on, the term "unicast probe" or simply "probe" designates any unicast network layer packet considered by the measurement methodology. As explained below, according to different embodiments, a probe may be a dedicated packet or it may as well be part of existing traffic.

According to an embodiment, said delivery ratio of unicast probe packets (du) is defined as the fraction having as numerator the number of unicast packets (at layer-3) successfully delivered on the link l[n1,n2], and having as denominator the number of unicast probes sent (at layer-3).

According to a particular embodiment, the sent unicast packets are dedicated probes.

Advantageously, a timestamp is collected during said collecting step.

Preferably, a MAC layer retransmission count is collected during said collecting step.

According to a particular embodiment, the bit rates used for MAC layer transmissions are collected during said collecting step.

According to an embodiment, a sum of MAC back-off time per transmission is collected during said collecting step.

According to a particular embodiment, information related to the fact that a given packet was finally successfully delivered or not is collected during said collecting step.

The present invention provides at least the following advantages:

• The present invention yields high accuracy of link characterization due to the link metric definition and the cross-layer measurement methodology.
• The method according to the present invention has the capacity to support both types of routing metrics:

traffic-independent metrics and traffic-dependent metrics.

It can present low sensitivity to traffic.

• The present invention yields good relation between the link metric and the link capacity.

## BRIEF DESCRIPTION OF THE DRAWINGS

The following detailed description will be better understood with the drawings, in which:

• Figure 1 is a functional diagram of a communication node, according to an embodiment;

• Figure 2 and Figure 3 are functional diagrams of a communication node, according to particular embodiments ;

• Figure 4 shows an example of a communication node (device) as used in the context of the present invention ; and

• Figure 5 illustrates the method according to the present invention.

## DETAILED DESCRIPTION

The present invention defines a link cost metric which describes the characteristics of a link due to the wireless environment, with low sensitivity to the traffic on the network.

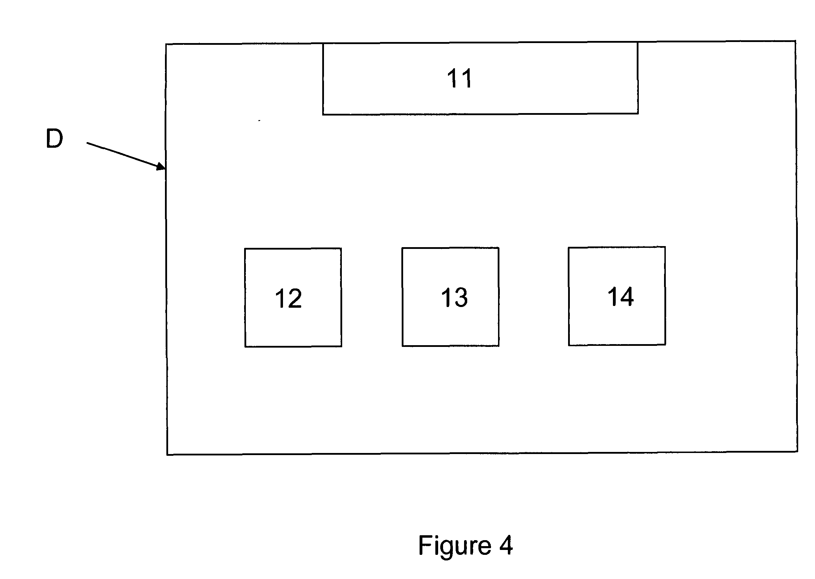

The communication device D shown on Figure 4 comprises a communication interface 11, a processor 12, a volatile memory 13 and a non-volatile memory 14.

The communication interface 11 could for instance be an IEEE 802.xy (for example .11) interface.

The processor 12, the volatile memory 13 and the non-volatile memory 14 are used for storage and processing.

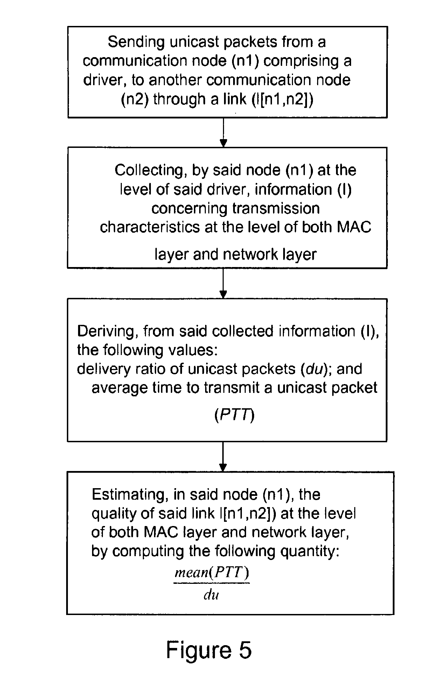

Figure 5 illustrates the method according to the present invention.

As shown on Figure 5, according to the invention, the method for characterizing a communication link in a communication network comprising at least two communication nodes (n1, n2, ..., np) and operating using a network protocol comprising a MAC (Media Access Control) layer and a network layer, comprises the steps of:

• Sending unicast probe packets from a communication node (n1) comprising a driver, to another communication node (n2) through a link (l[n1,n2]);
• collecting, by said node (n1) at the level of said driver, information (I) concerning transmission characteristics at the level of both MAC layer and network layer;
• deriving, from said collected information (I), the following values:

- delivery ratio of unicast packets *(du);* and
- average time to transmit a unicast packet (PTT) ; and

• estimating, in said node (n1), the quality of said link l[n1,n2]) at the level of both MAC layer and network layer, by computing the following quantity:

$$\frac{mean(PTT)}{du} \; .$$

The different steps of the method can occur partly simultaneously.

"Environment" refers here to the collection of factors which play a role in attenuating the signal strength or increasing the overall noise level (including, but not limited to): the relative location of the nodes, static obstacles such as walls, doors and furniture, temporary obstacles such as moving people, and radio frequency interferences, such as other devices transmitting on the same frequency or unrelated sources such as microwave ovens.

This property is achieved by capturing the MAC layer mechanisms specific of 802.11 itself, and using unicast network layer packets. The wireless environment can impact the operation of a wireless link through e.g., losses due to corruption of frames. At the MAC layer, frame losses are of primary importance for two aspects: the error control mechanism and the rate adaptation algorithm. The metric in the present invention captures two opposite effects of the MAC layer error control mechanism on the perceived capacity, taking also into account the per-frame rate adaptation algorithm. If, on one hand, retransmitting failed frames increases the layer-3 packet delivery ratio, and thus the perceived link capacity, on the other hand, retransmitting frames is time consuming, and the packet transmission time becomes the sum of the transmission times of each frame retransmission, which does decrease the perceived link capacity.

### *Metric Definition*

X-UTT (cross-layer Unicast Transmission Time) is defined as the average time to transmit a layer-3 unicast packet normalized by the delivery ratio of the layer-3 unicast packets:

$$X - UTT = \frac{mean(PTT)}{d_{u3}}$$

where *PTT* is the Packet Transmission Time as defined below, and $d_{u3}$ is the delivery ratio of unicast packet seen by level 3.

The element $d_{u3}$ is also designated as du in the present application. Thus, the terms $d_{u3}$ and du have the same meaning in the context of the present application.

The average *mean (PTT)* and the delivery ratio are evaluated over a time window. The delivery ratio is defined as the number of unicast probes (at layer-3) successfully delivered on the link, over the number of unicast probes sent (at layer-3). The definition of the total packet transmission time follows the description of the MAC layer mechanisms. For each retransmission, according to an embodiment, the transmission time is the sum of: (1) the time spent in waiting the medium to be free, (2) the time to access the medium, (3) the time to actually send the frame on the air and (4) the time to get (or not) the acknowledgement (ACK) back. While three of these components are dependent on the losses occurred on the link, the time spent in waiting the medium to be free is a function of the contention and the traffic on the network.

According to another embodiment, the time spent in waiting the medium to be free is not taken into account for the computation of the transmission time, and the transmission time is the sum of the time to access the medium, the time to actually send the frame on the air and the time to get (or not) the ACK back.

According to this embodiment, since X-UTT is designed to express the link characteristics due to the environment and be insensitive to the traffic load, the frame transmission time *FTT* is defined as (1) the time to access the medium $t_b$, (2) the time to send the frame on the air $t_t$ and (3) the time to get the ACK back (this is a constant quantity which does not discriminate one link from another, and can in fact be ignored), but it does not take into account the time spent to wait for the medium to be free.

$$FTT = t_b + t_t$$

The air transmission time $t_t$ is the time to send the layer-1 headers plus the time to send the MAC frame at the selected bit-rate. We define $T_t$, the sum of $t_t$ for every retransmission, as:

$$T_t = size * \sum_{\forall (r, tx_r) \in R} \frac{tx_r}{r}$$

where *size* is the size of the packet in bits, *R* is the retransmissions pattern, *r* is a used bit-rate, $tx_r$ is the number of transmissions sent at *r*. We call retransmissions pattern the description of all the retransmissions done for a layer-3 unicast packets, along with the bit-rate used for each retransmission. We express this pattern with four pairs of numbers: $(r_0, tx_0)$, $(r_1, tx_1)$, $(r_2, tx_2)$, $(r_3, tx_3)$, which mean that a packet has been retransmitted

$tx_0$ times using the bit-rate $r0$, and then it has been retransmitted $tx_1$ times using the bit-rate $r_1$, and so on.

The time to access the medium ($t_b$) is expressed as the sum of a DIFS and the backoff time, we approximate it with the sole backoff time because the smallest backoff time (150microseconds for IEEE 802.11g) is significantly bigger than a DIFS (50microseconds for IEEE 802.11g). Since the backoff time is a random number of fixed size time slots, we consider the expected value of this random variable:

$$t_b = slotTime * \frac{cw}{2}$$

$$cw = (cw_{min} + 1) * 2^t - 1$$

where $t$ is the number of previously failed transmissions, for the probe being sent.

We define $T_b$ as the sum of $t_b$ for every retransmission:

$$T_b = \sum_{\forall retr.} t_b$$

The total packet transmission time is then the sum of $T_t$ and $T_b$:

$$PTT = T_t + T_b$$

*Metric Computation Examples*

In this section, examples of metric value boundaries when using the MadWifi implementation (considering a minimum contention window of 15 and a maximum of 1023, a maximum number of retransmissions of 8, sample rate and multi-rate retries option enabled) are given, a probe packet sending rate of 1 probe/s, and computing the metric designated as X-UTT over a 2 minutes period. Under these conditions, X-UTT can vary from a minimum value of 227.19 to a maximum value (for a minimum non null $du$) of $7.66*10^6$. The minimum value has been obtained considering the optimal case, where all the probe packets considered for the estimation of X-UTT have been successfully delivered with only one transmission, using the maximum bit-rate (54 Mbps): in this case, the metric designated as X-UTT depends only on $PTT$, which is the sum of the minimum $T_t$ (77.5 microseconds, for IEEE 802.11g) and the minimum $T_b$ (150 microseconds for IEEE 802.11g). The maximum (finite) value have been obtained considering the worst case, where all the considered probe packets have been retransmitted 8 times (this is the maximum number of retransmission), and only one probe was successful: $T_t$ is 33.5ms (the sum of the 8 air transmission time at 1Mbps), $T_b$ is 81.84ms (sum of the 8 backoff time), $d_{u3}$ is 1/120. Note that X-UTT can take an infinite value when the unicast delivery ratio ($du$) as zero.

*Measurement Methodology*

In order to acquire the information about the wireless link state needed by X-UTT, the inventors of the present invention have also designed a measurement methodology as follows. Each node in the network transmits network layer unicast packets to each of its neighbors (using either dedicated periodic packets and/or existing traffic, according to a chosen embodiment). The term "probe" designates a unicast network layer packet considered by this measurement methodology. The transmitting node then performs monitoring at the MAC layer and collects the following information for each of these probes: timestamp, the MAC layer retransmission count, the bit rate used for each MAC layer transmission, the sum of the MAC back-off time per each transmission, and whether the probe was finally successfully delivered or not. Additionally, the RSSI (Received Signal Strength Indication) of each successfully delivered probe is collected (although not used by the metric defined in the present invention).

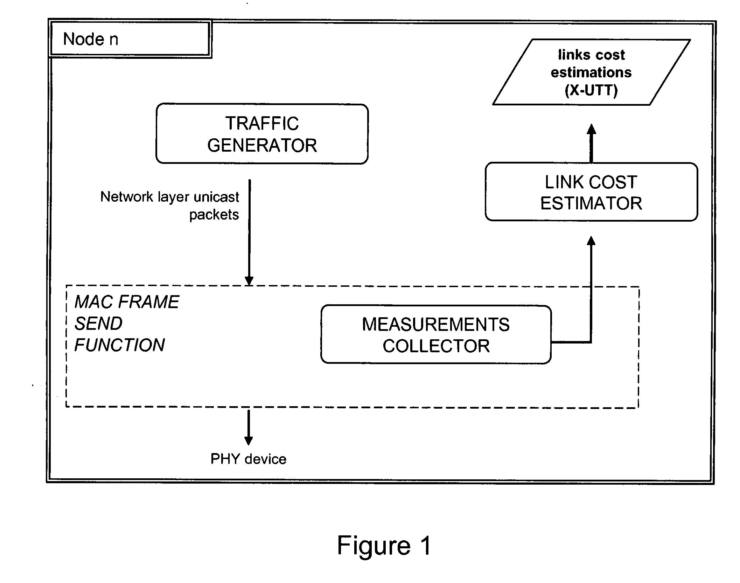

Figure 1 is a functional diagram of a communication node, according to an embodiment.

On this Figure:

The output of the system is indicated with the parallelogram:

• links cost estimations

The main blocks of the system are indicated by the rounded box:

• traffic generator

• measurement collector

• link cost estimator

The "measurement collector" is preferably implemented inside the driver, likely as part of the *"MAC FRAME SEND FUNCTION"*.

The other two blocks "traffic generator" and "metric estimator" may be implemented inside or outside the driver.

According to the embodiment illustrated on Figure 1:

The measurement collector is integrated in the driver and provides details regarding the MAC-layer transmission of a frame, such as the outcome of the final transmission (i.e. if the frame was finally received or discarded), the number of retransmissions done by the MAC-layer and the list of bit-rates used (one for each retransmission).

The link cost estimator is a computer program which takes the information above and performs a matching step in order to compute the link metric designated above as X-UTT. The place of this computer program and how the communication between this and the driver happens depend on the chosen implementation.

The traffic generator is any source of unicast network layer packets. According to different embodiments it may be a computer program which gives to the MAC layer dedicated unicast packets to be sent or another unspecified source of traffic, or a hybrid solution.

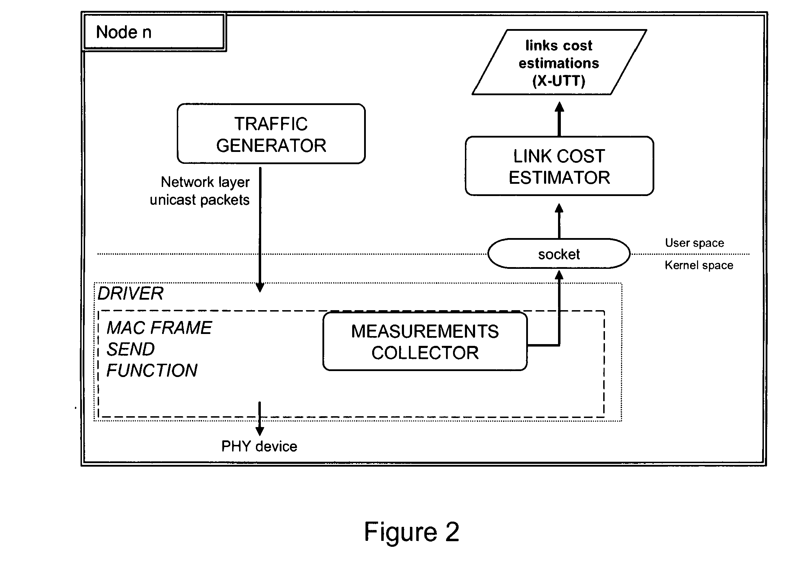

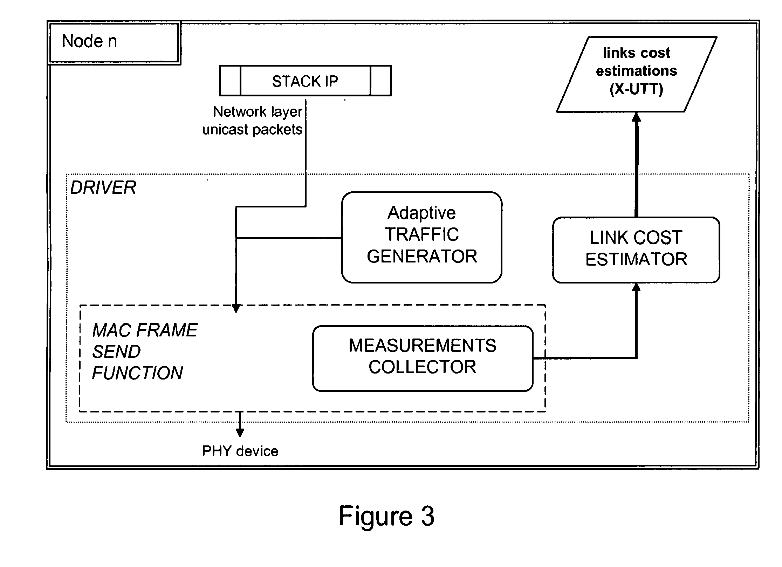

Figure 2 and Figure 3 are functional diagrams of a communication node, according to particular embodiments.

In the Example as shown on Figure 2, only minimal changes are provided to the driver.

In the Example of Figure 3, most or all the functions are implemented on the driver. Of course, intermediate solutions may also be adopted.

In the Example shown on Figure 2:

- The measurement collector is implemented inside the driver.
- The traffic generator is an application which sends dedicated probe packets.
- The link cost estimator is implemented at the level of the application layer.

On Figure 2, a traffic generator dedicated to the system is described (other traffic which may be present in the node is not considered here).

The "traffic generator" is, in particular, adapted to generate packets, notably probe packets. This "traffic generator" will give the probe to the MAC layer to be sent, using the standard TCP/IP stack or not.

According to the particular embodiment as shown on Figure 2, the "measurement collector" is the only part implemented in the driver, i.e. in kernel space. In this embodiment, the "link cost estimator" is implemented as an application, which means it cannot directly access the information collected in the driver by the measurement collector.

In order to allow communication between these two blocks, a socket can be used. The communication can be one-way, as indicated by the arrows.

In the Example shown on Figure 3, all the functional blocks are implemented in the driver.

In the Example shown on Figure 3:

- All the system blocks are implemented in the driver:

    the measurement collector, the traffic generator and
the link cost estimator.

- The traffic generator can be adaptive: it will generate dedicated traffic only on those links where there is currently not enough traffic from the "normal » IP stack.

- The IP stack is the part of every communication node which implements the network layer (layers 3).

In this Example, the "measurement collector" collects information about every packet sent by the MAC layer (or some sub-sample). The "traffic/packet generator" will automatically detects, if enough packets or not are sent on a link (i.e. from node n to each of his neighbors) and will then generate dedicated packets on that link.

In the Example shown on Figure 3, the "link cost estimator" is also implemented in the driver. The communication between the blocks is thus trivial. The measurement may even not be saved anywhere, but they will instead be immediately used to compute the final link cost. However, the *"link costs"* will, in this specific example, be exported by the driver.

A socket can be used, just as before (but this time from the metric estimator), or the API of the driver can also be modified.

The above two Examples are possible implementations and are not limiting. Intermediate and/or alternative technical solutions implementing the present invention can also be considered.

The above specification, examples and drawings provide a complete description of the method according to the present invention. Since many embodiments of the invention can be made without departing from the scope of the invention, the invention resides in the claims herein after appended.

**Claims**

1. Method for characterizing a communication link in a communication network comprising at least two communication nodes (n1, n2, ..., np) and operating using a network protocol comprising a MAC Media Access Control, layer and a network layer, **characterized in that** said method involves the steps of:

    • sending unicast packets from a first communication node (n1) comprising a driver, to another second communication node (n2) through a link (1[n1,n2]);
    • collecting, by said first node (n1) at the level of said driver, information (I) concerning transmission characteristics at the level of both MAC layer and network layer;
    • deriving, from said collected information (I), the following values:

- a delivery ratio of unicast packets, du; and
- an average time to transmit a unicast packet, mean<PTT>; and

• estimating, in said first node (n1), the quality of said link (l[n1,n2]) at the level of both MAC layer and network layer, by computing the following quantity:

$$\frac{mean < PTT >}{du}.$$

2. Method for characterizing a communication link in a communication network according to claim 1, **characterized in that** a time to transmit a unicast packet (PTT) is computed as the sum of:

(1) a time to access the medium;
(2) a time to actually send a frame on the air; and
(3) a time to get (or not) the acknowledgement (ACK) back.

3. Method for characterizing a communication link in a communication network according to claim 1, **characterized in that** a time to transmit a unicast packet (PTT), is computed as the sum of:

(1) a time spent in waiting the medium to be free;
(2) a time to access the medium;
(3) a time to actually send a frame on the air; and
(4) a time to get (or not) the acknowledgement (ACK) back.

4. Method for characterizing a communication link in a communication network according one of the preceding, **characterized in that** said delivery ratio of unicast packets (du) is defined as the fraction having as numerator the number of unicast packets at layer-3 successfully delivered on the link (l[n1,n2]), and having as denominator the number of unicast probes sent at layer-3.

5. Method for characterizing a communication link in a communication network according to one of the preceding claims, **characterized in that** the sent unicast packets are dedicated probes.

6. Method for characterizing a communication link in a communication network according to one of the preceding claims, **characterized in that** a timestamp is collected during said collecting step.

7. Method for characterizing a communication link in a communication network according to one of the preceding claims, **characterized in that** a MAC layer retransmission count is collected during said collecting step.

8. Method for characterizing a communication link in a communication network according to one of the preceding claims, **characterized in that** the bit rates used for MAC layer transmissions are collected during said collecting step.

9. Method for characterizing a communication link in a communication network according to one of the preceding claims, **characterized in that** a sum of MAC back-off time per transmission is collected during said collecting step.

10. Method for characterizing a communication link in a communication network according to one of the preceding claims, **characterized in that** information related to the fact that a given packet was finally successfully delivered or not is collected during said collecting step.

**Patentansprüche**

1. Verfahren zum Charakterisieren einer Kommunikationsverbindung in einem Kommunikationsnetz, das mindestens zwei Kommunikationsknoten (n1, n2, ..., np) umfasst und unter Verwendung eines Netzprotokolls arbeitet, das eine MAC-Schicht, Medienzugangskontrollschicht, und eine Vermittlungsschicht umfasst,
**dadurch gekennzeichnet, dass** das Verfahren die folgenden Schritte umfasst:

• Senden von Unicast-Paketen von einem ersten Kommunikationsknoten (n1), der einen Treiber umfasst, an einen anderen, zweiten Kommunikationsknoten (n2) über eine Verbindung (l[n1, n2]);
• Sammeln von Informationen (I), die die Übertragungscharakteristiken auf der Ebene sowohl der MAC-Schicht als auch der Vermittlungsschicht betreffen, durch den ersten Knoten (n1) auf der Ebene des Treibers;
• Ableiten der folgenden Werte aus den gesammelten Informationen (I):

- eines Lieferverhältnisses von Unicast-Paketen du; und
- einer Durchschnittszeit zum Senden eines Unicast-Pakets mean < PTT >; und

• Schätzen der Qualität der Verbindung (l[n1, n2]) auf der Ebene sowohl der MAC-Schicht als auch der Vermittlungsschicht in dem ersten Knoten (n1) durch Berechnen der folgenden Größe:

$$\frac{mean < PTT >}{du}.$$

2. Verfahren zum Charakterisieren einer Kommunikationsverbindung in einem Kommunikationsnetz nach Anspruch 1, **dadurch gekennzeichnet, dass** eine Zeit zum Senden eines Unicast-Pakets (PTT) als die folgende Summe berechnet wird:

(1) einer Zeit zum Zugreifen auf das Medium;
(2) einer Zeit zum tatsächlichen Senden eines Rahmens auf Sendung; und
(3) einer Zeit zum Zurückerhalten (oder nicht Zurückerhalten) der Quittierung (ACK).

3. Verfahren zum Charakterisieren einer Kommunikationsverbindung in einem Kommunikationsnetz nach Anspruch 1, **dadurch gekennzeichnet, dass** eine Zeit zum Senden eines Unicast-Pakets (PTT) als die folgende Summe berechnet wird:

(1) einer Zeit, die es dauert darauf zu warten, dass das Medium frei ist;
(2) einer Zeit zum Zugreifen auf das Medium;
(3) einer Zeit zum tatsächlichen Senden eines Rahmens auf Sendung; und
(4) einer Zeit zum Zurückerhalten (oder nicht Zurückerhalten) der Quittierung (ACK).

4. Verfahren zum Charakterisieren einer Kommunikationsverbindung in einem Kommunikationsnetz nach einem der vorhergehenden Ansprüche, **dadurch gekennzeichnet, dass** das Lieferverhältnis von Unicast-Paketen (du) als der Bruch definiert ist, der als Zähler die Anzahl der erfolgreich auf der Verbindung (l[n1, n2]) gelieferten Unicast-Pakete in der Schicht 3 aufweist und als Nenner die Anzahl der in der Schicht 3 gesendeten Unicast-Sonden aufweist.

5. Verfahren zum Charakterisieren einer Kommunikationsverbindung in einem Kommunikationsnetz nach einem der vorhergehenden Ansprüche, **dadurch gekennzeichnet, dass** die gesendeten Unicast-Pakete dedizierte Sonden sind.

6. Verfahren zum Charakterisieren einer Kommunikationsverbindung in einem Kommunikationsnetz nach einem der vorhergehenden Ansprüche, **dadurch gekennzeichnet, dass** während des Sammelschritts ein Zeitstempel gesammelt wird.

7. Verfahren zum Charakterisieren einer Kommunikationsverbindung in einem Kommunikationsnetz nach einem der vorhergehenden Ansprüche, **dadurch gekennzeichnet, dass** während des Sammelschritts ein MAC-Schicht-Übertragungswiederholungszählwert gesammelt wird.

8. Verfahren zum Charakterisieren einer Kommunikationsverbindung in einem Kommunikationsnetz nach einem der vorhergehenden Ansprüche, **dadurch gekennzeichnet, dass** die für die MAC-Schicht-Sendungen verwendeten Bitraten während des Sammelschritts gesammelt werden.

9. Verfahren zum Charakterisieren einer Kommunikationsverbindung in einem Kommunikationsnetz nach einem der vorhergehenden Ansprüche, **dadurch gekennzeichnet, dass** während des Sammelschritts eine Summe der MAC-Backoff-Zeit pro Sendung gesammelt wird.

10. Verfahren zum Charakterisieren einer Kommunikationsverbindung in einem Kommunikationsnetz nach einem der vorhergehenden Ansprüche, **dadurch gekennzeichnet, dass** während des Sammelschritts Informationen in Bezug auf die Tatsache gesammelt werden, dass ein gegebenes Paket schließlich erfolgreich geliefert wurde oder nicht.

## Revendications

1. Procédé pour caractériser une liaison de communication dans un réseau de communication comprenant au moins deux noeuds de communication (n1, n2,..., np) et fonctionnant par le biais d'un protocole de réseau comprenant une couche MAC (Contrôle d'accès au support), et une couche réseau, **caractérisé en ce que** ledit procédé implique les étapes de :

• envoi de paquets de monodiffusion depuis un premier noeud de communication (n1) comprenant un pilote, vers un second noeud de communication (n2) via une liaison (l[n1,n2]) ;
• collecte, par ledit premier noeud (n1) au niveau dudit pilote, d'informations (I) concernant des caractéristiques de transmission à la fois au niveau de la couche MAC et de la couche réseau ;
• dérivation, à partir desdites informations collectées (I), des valeurs suivantes :

- un rapport de livraison de paquets de monodiffusion, du; et
- un temps moyen pour transmettre un paquet de monodiffusion, mean <PTT>; et

• estimation, dans ledit premier noeud (n1), de la qualité de ladite liaison (l[n1,n2]) à la fois au niveau de la couche MAC et de la couche réseau, en calculant la quantité suivante :

$$\frac{mean<PTT>}{du}$$

**2.** Procédé pour caractériser une liaison de communication dans un réseau de communication conformément à la revendication 1, **caractérisé en ce qu'**un temps pour la transmission d'un paquet de monodiffusion (PTT) est calculé comme étant la somme de :

   (1) un temps pour accéder au support ;
   (2) un temps pour effectivement envoyer une trame à l'antenne ; et
   (3) un temps pour recevoir (ou non) l'accusé de réception (ACK).

**3.** Procédé pour caractériser une liaison de communication dans un réseau de communication conformément à la revendication 1, **caractérisé en ce qu'**un temps pour la transmission d'un paquet de monodiffusion (PTT) est calculé comme étant la somme de :

   (1) un temps passé à attendre que le support se libère ;
   (2) un temps pour accéder au support ;
   (3) un temps pour effectivement envoyer une trame à l'antenne ; et
   (4) un temps pour recevoir (ou non) l'accusé de réception (ACK).

**4.** Procédé pour caractériser une liaison de communication dans un réseau de communication selon l'une des revendications précédentes, **caractérisé en ce que** ledit rapport de livraison des paquets de monodiffusion (du) est défini comme étant la fraction ayant comme numérateur le nombre de paquets de monodiffusion à la couche 3 livrés avec succès sur la liaison (l[n1,n2]) et ayant comme dénominateur le nombre de sondes de monodiffusion envoyées à la couche 3.

**5.** Procédé pour caractériser une liaison de communication dans un réseau de communication selon l'une des revendications précédentes, **caractérisé en ce que** les paquets de monodiffusion envoyés sont des sondes dédiées.

**6.** Procédé pour caractériser une liaison de communication dans un réseau de communication selon l'une des revendications précédentes, **caractérisé en ce qu'**une estampille temporelle est collectée lors de ladite étape de collecte.

**7.** Procédé pour caractériser une liaison de communication dans un réseau de communication selon l'une des revendications précédentes, **caractérisé en ce qu'**un décompte de retransmission de couche MAC est collecté lors de ladite étape de collecte.

**8.** Procédé pour caractériser une liaison de communication dans un réseau de communication selon l'une des revendications précédentes, **caractérisé en ce que** les taux binaires utilisés pour les transmissions de couche MAC sont collectés lors de ladite étape de collecte.

**9.** Procédé pour caractériser une liaison de communication dans un réseau de communication selon l'une des revendications précédentes, **caractérisé en ce qu'**une somme de temps de réduction de puissance MAC par transmission est collectée lors de ladite étape de collecte.

**10.** Procédé pour caractériser une liaison de communication dans un réseau de communication selon l'une des revendications précédentes, **caractérisé en ce que** les informations liées au fait qu'un paquet donné ait finalement été livré avec succès ou pas sont collectées lors de ladite étape de collecte.

EP 2 232 772 B1

Figure 1

Figure 2

Figure 3

11

12　13　14

D

Figure 4

```
┌─────────────────────────────────────┐
│   Sending unicast packets from a    │
│ communication node (n1) comprising a│
│  driver, to another communication   │
│       node (n2) through a link      │
│              (l[n1,n2])             │
└─────────────────────────────────────┘
                  │
                  ▼
┌─────────────────────────────────────┐
│   Collecting, by said node (n1) at  │
│   the level of said driver,         │
│   information (I) concerning        │
│   transmission characteristics at   │
│   the level of both MAC             │
│                                     │
│   layer and network layer           │
└─────────────────────────────────────┘
                  │
                  ▼
┌─────────────────────────────────────┐
│ Deriving, from said collected       │
│ information (I), the following      │
│ values:                             │
│ delivery ratio of unicast packets   │
│ (du); and                           │
│   average time to transmit a        │
│   unicast packet                    │
│                                     │
│              (PTT)                  │
└─────────────────────────────────────┘
                  │
                  ▼
┌─────────────────────────────────────┐
│ Estimating, in said node (n1), the  │
│ quality of said link l[n1,n2]) at   │
│ the level of both MAC layer and     │
│ network layer, by computing the     │
│ following quantity:                 │
│                                     │
│          mean(PTT)                  │
│          ─────────                  │
│              du                     │
└─────────────────────────────────────┘
```

## Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007060157 A
- WO 2006006117 A

**Non-patent literature cited in the description**

- Architecture and evaluation of an unplanned 802.11b mesh network. **J. BICKET ; D. AGUAYO ; S. BISWAS ; R. MORRIS.** MobiCom '05: Proceedings of the 11th annual international conference on Mobile computing and networking. ACM Press, 2005, 31-42
- **H. LUNDGREN ; K. RAMACHANDRAN ; E. BELDING-ROYER ; K. ALMEROTH ; M. BENNY ; A. HEWATT ; A. TOUMA ; A. JARDOSH.** Experiences from building and using the UCSB meshnet testbed. *IEEE Wireless Network,* April 2006
- **D. JOHNSON ; Y.-C. HU ; D. MALTZ.** The dynamic source routing protocol (DSR) for mobile ad hoc networks for IPv4. *IETF Internet RFC 4728,* February 2007
- **C. PERKINS ; E. BELDING-ROYER ; S. DAS.** Ad hoc on-demand distance vector (AODV) routing. *IETF Internet RFC 3561,* July 2003
- **T. CLAUSEN ; P. JACQUET.** Optimized link state routing protocol (OLSR). *IETF Internet RFC 3626,* October 2003
- Routing in multi-radio, multi-hop wireless mesh networks. **R. DRAVES ; J. PADHYE ; B. ZILL.** MobiCom '04: Proceedings of the 10th annual international conference on Mobile computing and networking. ACM Press, 2004, 114-128
- **D. AGUAYO ; J. BICKET ; S. BISWAS ; G. JUDD ; R. MORRIS.** Link-level measurements from an 802.11b mesh network. *SIGCOMM Comput. Commun. Rev.,* 2004, vol. 34 (4), 121-132
- **D. COUTO ; D. AGUAYO ; J. BICKET ; R. MORRIS.** A high-throughput path metric for multi-hop wireless routing. *A high-throughput path metric for multi-hop wireless routing,* 2003
- **S. M. DAS ; H. PUCHA ; D. PAPAGIANAKKI ; Y. C. HU.** Understanding wireless routing link metric dynamics. *IMC '07,* 2007
- **H. LUNDGREN ; E. NORDSTROM ; C. TSCHUDIN.** Coping with communication gray zones in IEEE 802.11b based ad hoc networks. *Proceedings of the 5th ACM International Workshop on Wireless Mobile Multimedia (WoWMoM,* September 2002
- **Y. YANG ; J. WANG ; R. KRAVETS.** Interference-aware load balancing for multihop wireless networks. *Technical report,* 2005
- On accurate measurement of link quality in multihop wireless mesh networks. **K.-H. KIM ; K. G. SHIN.** MobiCom '06: Proceedings of the 12th annual international conference on Mobile computing and networking. ACM Press, 2006, 38-49
- **R. DRAVES ; J. PADHYE ; B. ZILL.** Comparison of routing metrics for static multi-hop wireless networks. *SIGCOMM Comput. Commun. Rev.,* 2004, vol. 34 (4), 133-144